# EUROPÄISCHE PATENTANMELDUNG

(11) **EP 4 760 208 A2**
(43) Veröffentlichungstag der Anmeldung: **17.06.2026**
(21) Anmeldenummer: 25222810.1
(22) Anmeldetag: 12.12.2025
(51) Int. Cl.: G01C 21/00, G06V 20/56

(54) **VERFAHREN ZUM VERMESSEN EINER REALEN FAHRSPURRANDLINIE**

(30) Priorität: 13.12.2024 AT 509832024
(71) Anmelder: AVL List GmbH, 8020 Graz (AT)
(72) Erfinder: Keidler, Sebastian, 87439 Kempten (DE); Prüggler, Adrian, 8020 Graz (AT); Sattler, Martin, 8042 Graz (AT)

(57) **Zusammenfassung**

Die vorliegende Erfindung liefert ein Verfahren zum Vermessen einer realen Fahrspurrandlinie, umfassend die Schritte: a) Bereitstellen eines Fahrzeugs (10), welches eine Messeinrichtung (12) umfassend ein Inertialmesssystem, eine GNSS-Antenne (20) und eine mit dem Inertialmesssystem und der GNSS-Antenne (20) zeitsynchrone Kameraeinrichtung (13) umfasst; b) Kalibrieren der Kameraeinrichtung (13) mit einer am Boden angeordneten Kalibriereinrichtung (22); c) Aufnehmen der Fahrzeugausrichtung mit dem Inertialmesssystem, der Fahrzeugposition mit der GNSS-Antenne (20) und Bildern mit der kalibrierten Kameraeinrichtung (13), während eines Abfahrens einer Fahrspur (60), sodass wenigstens einige der Bilder eine Vermessungslinie (40) zwischen einem äußeren Auflagepunkt (32) eines Reifens (16, 18) und einer realen Fahrspurrandlinie (36) aufweisen; d) Erzeugen eines Analysebilds (43) als zeitlich geordnete Anordnung der Vermessungslinien (40); e) Erzeugen einer rekonstruierten Fahrspurrandlinie (45) im Analysebild (43) mit einem Kantendetektionsalgorithmus, und f) Berechnen von Absolutpositionen der realen Fahrspurrandlinie (36) aus jeweils zum gleichen Zeitpunkt aufgenommenen Werten der Fahrzeugausrichtung, der Fahrzeugposition und einem Abstand (42) zwischen dem äußeren Auflagepunkt (32) des Reifens (16, 18) und dem jeweiligen Zeitpunkt entsprechenden Werten der rekonstruierten Fahrspurrandlinie (45) im Analysebild (43).

## Beschreibung

Die vorliegende Erfindung betrifft ein Verfahren zum Vermessen einer realen Fahrspurrandlinie, eine dreidimensionale Straßenkarte, die mit einem solchen Verfahren erstellt wurde, ein Verfahren zur Verwendung einer solchen dreidimensionalen Straßenkarte zur Steuerung eines autonomen Fahrzeugs und eine Sensoreinrichtung zum Vermessen einer realen Fahrspurrandlinie.

Die vorliegende Erfindung beruht auf bekannten Techniken zur Vermessung von Straßen. Hierbei werden Straßen manuell vermessen, mit Kameras abgefahren oder mit Lasern gescannt.

Nachteilhaft bei den bekannten Lösungen ist es, dass diese entweder ungenau, messtechnisch besonders aufwändig oder für Anwendungen wie autonomes Fahren nicht alle relevanten Parameter erfassen.

Insbesondere für Anwendungen im Bereich des autonomen Fahrens werden regelmäßig hochauflösende dreidimensionale Straßenkarten benötigt. Hochauflösende Karten können beim autonomen Fahren wichtige Sicherheitsaspekte besser berücksichtigen und zur genauen Erkennung von sonst uneindeutigen Fahrsituationen beitragen. Auch für die Steuerung der Fahrzeuge zur besseren Planung der Fahrtroute sind hochauflösende dreidimensionale Karten vorteilhaft.

Es ist Aufgabe der vorliegenden Erfindung, in kostengünstiger und besonders einfacher Weise die voranstehend beschriebenen Nachteile zumindest teilweise zu beheben. Insbesondere ist es Aufgabe der vorliegenden Erfindung, in einfacher Weise eine Fahrspurrandlinie mit hoher Genauigkeit zu vermessen.

Es ist eine weitere Aufgabe der Erfindung, eine dreidimensionale Straßenkarte bereitzustellen, die eine Genauigkeit einer Steuerung eines autonomen Fahrzeugs verbessert.

Es ist eine weitere Aufgabe der Erfindung, eine dreidimensionale Straßenkarte bereitzustellen, mit der sich das Fahrverhalten eines Fahrzeugs bewerten lässt.

Es ist eine weitere Aufgabe der Erfindung, ein Verfahren bereitzustellen, mit dem die Genauigkeit einer dreidimensionalen Straßenkarte mittels einer Validierung garantiert werden kann.

Es ist eine weitere Aufgabe der Erfindung, eine dreidimensionale Straßenkarte bereitzustellen, die in Echtzeit eine Verortung eines Fahrzeugs ermöglicht.

Die voranstehenden Aufgaben werden gelöst, durch ein Verfahren mit den Merkmalen des Anspruchs 1, einer Straßenkarte mit den Merkmalen des Anspruchs 12, Verfahren zur Verwendung einer solchen Straßenkarte mit den Merkmalen des Anspruchs 13 und 14 und eine Sensoreinrichtung mit den Merkmalen des Anspruchs 15. Weitere Merkmale und Details der Erfindung ergeben sich aus den Unteransprüchen, der Beschreibung und den Zeichnungen. Dabei gelten Merkmale und Details, die im Zusammenhang mit den jeweiligen erfindungsgemäßen Verfahren beschrieben sind, selbstverständlich auch im Zusammenhang mit den anderen Verfahren, der erfindungsgemäßen dreidimensionalen Straßenkarte und der Sensoreinrichtung und jeweils umgekehrt, sodass bezüglich der Offenbarung zu den einzelnen Erfindungsaspekten stets wechselseitig Bezug genommen wird beziehungsweise werden kann.

Erfindungsgemäß soll ein Verfahren die Vermessung einer realen Fahrspurrandlinie ermöglichen. Ein solches Verfahren zeichnet sich durch die folgenden Schritte aus
a) Bereitstellen eines Fahrzeugs, welches eine Messeinrichtung umfassend ein Inertialmesssystem, eine GNSS-Antenne und eine mit dem Inertialmesssystem und der GNSS-Antenne zeitsynchrone Kameraeinrichtung umfasst;
b) Kalibrieren der Kameraeinrichtung mit einer am Boden angeordneten Kalibriereinrichtung;
c) Aufnehmen der Fahrzeugausrichtung mit dem Inertialmesssystem, der Fahrzeugposition mit der GNSS-Antenne und Bildern mit der kalibrierten Kameraeinrichtung, während eines Abfahrens einer Fahrspur, sodass wenigstens einige der Bilder eine Vermessungslinie zwischen einem äußeren Auflagepunkt eines Reifens und einer realen Fahrspurrandlinie aufweisen;
d) Erzeugen eines Analysebilds als zeitlich geordnete Anordnung der Vermessungslinien; und
e) Erzeugen einer rekonstruierten Fahrspurrandlinie im Analysebild mit einem Kantendetektionsalgorithmus, und
f) Berechnen von Absolutpositionen der realen Fahrspurrandlinie aus jeweils zum gleichen Zeitpunkt aufgenommenen Werten der Fahrzeugausrichtung, der Fahrzeugposition und einem Abstand zwischen dem äußeren Auflagepunkt des Reifens und dem jeweiligen Zeitpunkt entsprechenden Werten der rekonstruierten Fahrspurrandlinie im Analysebild.

Der Kerngedanke eines erfindungsgemäßen Verfahrens liegt darin, dass es mit einer Kalibriereinrichtung und einem Fahrzeug, welches zur Vermessung eine Kameraeinrichtung, ein Inertialmesssystem und eine GNSS-Antenne benötigt, einfach möglich ist, Fahrspuren und insbesondere Fahrspurrandlinien mit hoher Genauigkeit und Zuverlässigkeit zu vermessen.

Zur Aufnahme der Kartendaten dient ein mit einem Inertialmesssystem und einer GNSS-Antenne ausgestattetes Fahrzeug. Das Fahrzeug ist daher ein Detektionsfahrzeugs. Das Inertialmesssystem (engl. Inertial measurement unit, IMU) umfasst eine Kombination mehrerer Inertialsensoren wie Beschleunigungssensoren und Drehratensensoren. Zur Erfassung der sechs möglichen kinematischen Freiheitsgrade umfasst das Inertialmesssystem drei jeweils aufeinander orthogonal stehende Beschleunigungssensoren (Translationssensoren) für die Erfassung der translatorischen Bewegung in x- bzw. y- bzw. z-Achse und drei orthogonal zueinander angebrachten Drehratensensoren (Gyroskopische Sensoren) für die Erfassung rotierender (kreisender) Bewegungen in x- bzw. y- bzw. z-Achse. Eine inertiale Messeinheit liefert als Messwerte drei lineare Beschleunigungswerte für die translatorische Bewegung und drei Winkelgeschwindigkeiten für die Drehraten. In einem Trägheitsnavigationssystem (INS) wird aus den Messwerten des Inertialmesssystems für die lineare Beschleunigungen, nach Kompensation der Erdbeschleunigung, durch Integration die lineare Geschwindigkeit und nochmalige Integration die Position im Raum bezogen zu einem Referenzpunkt ermittelt. Die Integration der drei Winkelgeschwindigkeiten liefert, bezogen zu einem Referenzpunkt, die Orientierung im Raum. Zum Bestimmen der Integrationskonstanten, zur Verbesserung der Genauigkeit und um die Nullpunkt- und Langzeitdrift der oben genannten Sensoren zu korrigieren, können zusätzliche Magnetometer integriert sein.

Die GNSS-Antenne dient zur dreidimensionalen Positionsbestimmung des Fahrzeugs auf der Erde. GNSS ist ein Sammelbegriff für die Verwendung bestehender und künftiger globaler Satellitensysteme wie NAVSTAR GPS, GLONASS Galileo und Beidou.

Das Verfahren kann insbesondere computerimplementiert sein.

Die Messeinrichtung kann eine Kamera oder mehrere Kameras, insbesondere drei Kameras aufweisen, welche zur Durchführung des Verfahrens jeweils Videos und/oder in kurzen Abständen hintereinander aufgenommene Einzelbilder aufnehmen. Vorzugsweise beträgt die Sampling-Rate wenigstens 20 Bilder pro Sekunde, besonders bevorzugt wenigstens 30 Bilder pro Sekunde und am bevorzugtesten wenigstens 50 Bilder pro Sekunde. Es ist aber grundsätzlich auch möglich, das Verfahren mit deutlich geringeren Sampling-Raten durchzuführen. Vorzugsweise stellen die in Schritt b) aufgenommenen Bilder wenigstens alle 2 Meter die Fahrbahn dar. Die Kameras sind miteinander, mit dem Inertialmesssystem und der GNSS-Antenne jeweils zeitsynchron. Grundsätzlich weisen die unterschiedlichen Systeme jedoch unterschiedliche Sampling-Raten auf. Beispielsweise kann die GNSS-Antenne eine Sampling-Rate von 100Hz aufweisen. Die Kameras können während der Durchführung des Verfahrens beispielsweise Bilder mit 20 fps (20Hz) aufnehmen. Das Inertialmesssystem kann beispielsweise Daten mit einer Frequenz von 30Hz aufnehmen. Die Zeitpunkte der aufgenommenen Bilder und Messwerte stimmen daher im Allgemeinen nicht genau überein. Zur Erhöhung der Genauigkeit kann ein Datensynchronisierungsschritt durchgeführt werden. Hierzu können zu jedem Einzelbild auf den Aufnahmezeitpunkt des Einzelbildes angepasste Datenpunkte der GNSS-Antenne und des Inertialmesssystems berechnet werden. Die Berechnung kann durch Interpolation der Messdaten, insbesondere durch lineare Interpolation der um diesen Messzeitpunkt liegenden Messwerte der GNSS-Antenne und des Inertialmesssystems berechnet werden. Der auf diese Weise durchgeführte Datensynchronisierungsschritt ermöglicht, die Daten der GNSS-Antenne und des Inertialmesssystems mit denen der Bilder zu synchronisieren, also Daten erzeugt werden, deren Zeitstempel mit Zeitstempeln der Bilder übereinstimmen. Hierzu weist jede einzelne Kamera vorzugsweise Synchronisationskanäle mit den folgenden Parametern auf: Bildaufnahmezeitpunkt, Breitengrad der Bildposition, Längengrad der Bildposition, Elevation der Bildposition und Orientierung der Bildposition.

Vorzugsweise sind die Kameras jeweils an der linken und/oder der rechten Seite, sowie bei zwei oder drei Kameras gegebenenfalls auch in der Mitte des Fahrzeugs angeordnet, wobei der Bildausschnitt der Kamera bzw. der Kameras so gewählt ist, dass das linke und/oder rechte Vorderrad sowie gegebenenfalls die Front des Fahrzeugs im gesamten Bildbereich der Kameras liegen. Mit der Kameraeinrichtung in Kombination mit der vorangegangenen Kamerakalibrierung, unter Verwendung der entwickelten Abstandsberechnungslogik können insbesondere auch relative, zeitsynchrone Abstände der Radaufstandspunkte (links und rechts) und/oder die äußeren Auflagepunkte der Reifen sowie eines bekannten oder ermittelten Schnittpunktes der Fahrzeugmittelebene in Fahrzeuglängsrichtung mit einer Ebene durch die Fahrzeugvorderachse und der Fahrbahnebene zu der realen Fahrspurrandlinie bestimmt werden. Die Radaufstandspunkte sind gegenüber den äußeren Auflagepunkten der Reifen um jeweils eine halbe Reifenbreite verschoben. Der Abstand kann auch Null sein, insbesondere bei Überfahren der Fahrspurrandlinie. Vorzugsweise kann in Schritt c) auch der Nullpunkt der Kalibrierung zum Bestimmen von einem Abstand zwischen dem äußeren Auflagepunkt des Reifens und einem Fahrspurrandpunkt der realen Fahrspurrandlinie genutzt werden. Der Nullpunkt der Kalibrierung ist ein fixer Punkt bekannter Position, insbesondere an einem Kalibrierband. Der Nullpunkt der Kalibrierung kann dazu verwendet werden, um die Kalibriergenauigkeit zu erhöhen.

Das Verfahren ermöglicht es, zu jedem Bildaufnahmezeitpunkt die genaue geographische Position des Fahrzeugs zu bestimmen. Hierzu kann zusätzlich zum Aufnahmezeitpunkt und zur Bildnummer der Längengrad, Breitengrad, die Höhe und die Genauigkeit der GNSS-Messung gespeichert werden. Mit den Verfahrensschritten zur Aufnahme der Messdaten liegen konsistente und synchronisierte Messdaten vor, welche automatisiert weiterverarbeitet werden können.

In Schritt b) kann das Kalibrieren der Kameraeinrichtung beispielsweise mit einem Kalibrierband mit Zentimetermaß durchgeführt werden, welches auf der Fahrspur angeordnet wird. Hierzu werden auf einem Bild, welches von der Kameraeinrichtung aufgenommen wurde und das Kalibrierband zeigt, die folgenden Schritte zur Kalibrierung durchgeführt:
- Rechtwinkliges Ausrichten des Kalibrierbandes, insbesondere mit einem Laser oder einer Lasermesseinrichtung
- Setzten von Kalibrierpunkten auf dem Kalibrierband
- Speichern der Kalibrierdatei
- Validierung der Kalibrierung mit einer Abstandsmessung

Zuerst werden Kalibrierpunkte auf die Zentimetermaße gesetzt. Die Kalibrierung findet anschließend auf einer Linie des Bildes statt. Die Kalibrierpunkte werden dabei auf der Kalibrierlinie im Bild in die Fadenkreuze auf dem Kalibrierband gesetzt. Der erste Kalibierpunkt ist der Nullpunkt der Kalibrierung und in aufsteigender Reihenfolge werden die weiteren Kalibrierungspunkte manuell und/oder automatisch gesetzt. Damit kann dann das Verhältnis von Bildpixel zu realem Abstandsmaß bestimmt werden. Die Kamerakalibrierung kann auch eine Faltung des Abstands zwischen dem Reifenauflagepunkt und einer senkrechten Linie zum Reifen auf eine Gerade umfassen. Hierdurch können Messfehler durch die Optik der Kameraeinrichtung ausgeglichen und die Auswertung vereinfacht werden.

Finden sich im äußeren Randbereich in einem Abstandssegment von 1 cm beispielsweise insgesamt 69 Pixel, kann auf 0,15 cm genau gemessen werden.

Die Kalibriergenauigkeit kann besonders bevorzugt vor und nach der Vermessung, also den Schritten b) und c) durchgeführt werden, womit sichergestellt werden kann, dass das Abstandsmaß korrekt ist. Dieser Schritt erhöht somit die Genauigkeit der Straßenkarte.

Vorzugsweise kann dabei die Kalibriereinrichtung eine Maßeinrichtung mit auf der Maßeinrichtung angeordneten Kalibriermarkierungen umfassen. Alternativ zur einfachen Form des Zentimetermaßes als Kalibriereinrichtung kann auch ein Messfeld, welches Maßeinrichtungen in zwei Dimensionen auf der Fahrspurfläche anordnet, vorgesehen sein. Die Kalibriereinrichtung kann eine Maßeinrichtung mit auf der Maßeinrichtung angeordneten Kalibriermarkierungen umfassen. Alternativ zur einfachen Form des Zentimetermaßes als Kalibriereinrichtung kann auch ein Messfeld, welches Maßeinrichtungen in zwei Dimensionen auf der Fahrspurfläche anordnet, vorgesehen sein.

Der Schritt c) kann dadurch ablaufen, dass eine Videodatei mit einer Anzahl von zu unterschiedlichen Aufnahmezeitpunkten aufgenommenen Bildern von der Kameraeinrichtung aufgezeichnet wird, wobei zu jedem Aufnahmezeitpunkt die genaue geographische Position des Fahrzeugs und über einen durch eine Messung bekannten dreidimensionalen Offset in kartesischen Koordinaten zwischen der Anordnung der GNSS-Antenne und dem äußeren Auflagepunkt des Reifens, der äußere Auflagepunkt des Reifens ermittelt wird. Sind mehrere Reifen und/oder mehrere äußere Auflagepunkte des Reifens am Verfahren beteiligt, sind jeweils eigene Offsets zu berücksichtigen. Vorzugsweise kann dabei zu jeder Videodatei eine synchrone Messdatei der Bildpositionen gespeichert werden.

Der Schritt d) des Erzeugens eines Analysebilds als zeitlich geordnete Anordnung der Vermessungslinien kann vorzugsweise durch zuschneiden der einzelnen Bilder jeweils auf die Vermessungslinie erfolgen. Sofern die Vermessungslinie keine horizontale Linie ist, kann die Vermessungslinie auf eine horizontale Vermessungslinie projiziert werden, wobei in diesem Fall die Projektionstransformation in das Berechnen der Absolutpositionen der realen Fahrspurrandlinie mit eingeht.

Der Schritt e) des Erzeugens einer rekonstruierten Fahrspurrandlinie im Analysebild mit einem Kantendetektionsalgorithmus kann mit unterschiedlichen Kantendetektionsalgorithmen durchgeführt werden, vorzugsweise mit einem Sobel-Operator, einem Scharr-Operator, einem Laplace-Filter und/oder einem Prewitt-Operator. Ferner kann der Kantendetektionsalgorithmus insbesondere auch ein oder mehrere der Kantenerkennungsmodelle DeeplabV3+, Unet, Resnet und/oder "Holistical nested edge detection" umfassen. Es können auch mehrere Kantendetektionsalgorithmen gleichzeitig oder nacheinander zur Analyse eingesetzt werden, insbesondere in Abhängigkeit der Lichtverhältnisse und/oder der Straßenverhältnisse, die bei der Aufnahme der Bilder herrschten. Der Kantenerkennungsalgorithmus dient dazu, flächige Bereiche im Analysebild voneinander zu trennen, wenn sie sich entlang gerader oder gekrümmter Linien ausreichend in Farb- oder Grauwert, Helligkeit oder Textur unterscheiden. Der Kantenerkennungsalgorithmus dient dazu, die Übergänge zwischen diesen Bereichen zu erkennen und als Kanten markieren. Zugleich soll aber ein einzelner, homogener Bereich als solcher erkannt werden und nicht durch eine Kante in zwei Flächen geteilt werden. Hierzu kann der Farbwertgradient an jedem einzelnen Pixel eines Bildes durch Untersuchung eines den Punkt umgebenden Bereiches berechnet werden. Dieser Vorgang erfolgt durch diskrete Faltung des Bildes mit einer Faltungsmatrix, dem Kantenoperator. Letzterer definiert dabei die Größe des zu untersuchenden Umfeldes und mit welcher Gewichtung dessen einzelne Pixel in die Berechnung eingehen. Der Kantenoperator ermittelt für das zentrale Pixel aus der Umgebung einen mittleren Wert für den Gradienten. Wird diese Operation für alle Pixel im Bild durchgeführt, lässt sich aus der resultierenden Matrix der Gradienten ein Kantenbild zusammensetzen. Auf diesem heben sich die Kanten zwischen homogenen Bereichen ab, da an diesen Stellen ein vergleichsweise großer Gradient der Farbwerte vorliegt. Andere Verfahren zur Kantendetektion sind ebenfalls möglich.

Der Schritt f) des Berechnens von Absolutpositionen der realen Fahrspurrandlinie aus jeweils zum gleichen Zeitpunkt aufgenommenen Werten der Fahrzeugausrichtung, der Fahrzeugposition und einem Abstand zwischen dem äußeren Auflagepunkt des Reifens und dem jeweiligen Zeitpunkt entsprechenden Werten der rekonstruierten Fahrspurrandlinie im Analysebild erfolgt insbesondere über bekannte Geometrien wie den bekannten Abstand der GNSS-Antenne zum äußeren Auflagepunkt des Reifens und den aus der Kalibrierung der Kameraeinrichtung bekannten Abständen der Vermessungslinie.

Vorteile bringt es weiter mit sich, wenn die Vermessungslinien eine Höhe von 1 Pixel aufweisen. Hierdurch können besonders lange Fahrspurrandlinien auf einfache Weise vermessen werden und es kann Speicherplatz gespart werden. Weiters ist es hierdurch möglich eine hohe Genauigkeit der Messung zu gewährleisten, insbesondere wenn in Schritt b) die Fahrspur mit einer im Wesentlichen konstanten Geschwindigkeit abgefahren wird.

Weitere Vorteile werden erreicht, wenn das Aufnehmen von Bildern in Schritt b) in zeitsynchronen Abständen erfolgt, wobei die Kameraeinrichtung vorzugsweise eine Videokamera aufweist. Dies ermöglicht oder vereinfacht eine automatisierte Auswertung der Daten. Ferner können hierdurch Auswertungsfehler vermieden werden. Weiter vorzugsweise kann vorgesehen sein, dass die Vermessungslinie eine horizontale Linie ist oder zu einer horizontalen Linie transformiert ist. Grundsätzlich kann das Verfahren auch dann durchgeführt werden, wenn die Vermessungslinie keine horizontale Linie ist, sondern einen Winkel zur Horizontalen aufweist. Hierdurch können die weiteren Auswertungsschritte jedoch mit höherem Aufwand verbunden sein. Die Vermessungslinie kann bereits eine horizontale Linie aus Pixeln im von der kalibrierten Kameraeinrichtung aufgenommenen Bild sein. Alternativ kann die Vermessungslinie nach der Aufnahme durch mathematische Operationen zu einer horizontalen Linie transformiert werden. Hier kommt insbesondere eine Faltung, eine Streckung und/oder eine Rotation in Betracht. Diese Transformationen werden bei der Berechnung der absolut Positionen berücksichtigt.

Vorzugsweise kann ferner vorgesehen sein, dass der Kantendetektionsalgorithmus eine Analyse mittels künstlicher Intelligenz umfasst. Als künstliche Intelligenz werden jegliche Maschinenlernverfahren verstanden. Insbesondere kann hierbei vorgesehen sein, dass der Kantendetektionsalgorithmus ein Modell mittels bestärkendem Lernen (eng. reinforcement learning) aufbaut.

In einer besonderen Ausführungsform der Erfindung kann vorgesehen sein, dass die Kameraeinrichtung eine erste Kamera an der linken Seite des Fahrzeugs und eine zweite Kamera an der rechten Seite des Fahrzeugs aufweist, wobei die erste Kamera derart ausgerichtet ist, dass ihr Sichtfeld einen äußeren Auflagepunkt eines linken Reifens umfasst und die zweite Kamera derart ausgerichtet ist, dass ihr Sichtfeld einen äußeren Auflagepunkt eines rechten Reifens umfasst. Insbesondere kann die Kameraeinrichtung auch eine dritte Kamera aufweisen, deren Sichtfeld eine Fahrzeugfront und die Fahrspur zeigt. Mit zwei auf unterschiedliche äußere Auflagepunkte der Reifen ausgerichteten Kameras kann Aufnahme der Bilder einer ersten und einer zweiten realen Fahrspurrandlinie parallel, also gleichzeitig oder im Wesentlichen gleichzeitig erfolgen. Eine dritte, zentrale Kamera erleichtert die Datenauswertung, da mit dieser ein vollständiges Bild der Straße erstellt werden kann. Auch hier kann ein Kalibrierverfahren angewendet werden, um alle relevanten Daten miteinander zu synchronisieren.

In einer weiteren bevorzugten Ausführungsform der Erfindung kann vorgesehen sein, dass die Kalibrierungseinrichtung eine Maßeinrichtung mit auf der Maßeinrichtung angeordneten Kalibriermarkierungen umfasst.

Weitere Vorteile werden erzielt, wenn das Verfahren zum Vermessen der realen Fahrspurrandlinie, die als erste reale Fahrspurrandlinie bezeichnet wird, zusätzlich dazu verwendet wird, eine zweite reale Fahrspurrandlinie zu vermessen, wobei die erste reale Fahrspurrandlinie und die zweite reale Fahrspurrandlinie einander gegenüberliegend sind und eine Fahrspur definieren. Hierdurch lassen sich weitere Anwendungen des erfindungsgemäßen Messverfahrens erschließen.

Weitere Vorteile werden erzielt, wenn das Verfahren ferner den Schritt umfasst: Ausgeben einer Karte mit den Absolutpositionen der realen Fahrspurrandlinie. Die Karte kann insbesondere ein Datensatz sein, der das Analysebild und zu jeder y-Position des Analysebilds einen Aufnahmezeitpunkt und/oder Aufnahmekoordinaten aufweist. Die Aufnahmekoordinaten können diejenigen der GNSS-Antenne und/oder diejenigen der realen Fahrspurrandlinie umfassen. Die Karte kann auch eine zweidimensionale oder eine dreidimensionale Straßenkarte sein oder umfassen.

Vorzugsweise ist jeder Koordinate im Analysebild ein Aufnahmezeitpunkt und/oder eine Fahrzeugposition und/oder eine Fahrzeugausrichtung zugeordnet. Dies vereinfacht die Auswertung in einigen besonderen Ausführungsformen der Erfindung.

Weitere Vorteile werden erreicht, wenn das Verfahren ferner die Schritte umfasst: Berechnen einer Mittelposition als geographischen Mittelpunkt von einer Absolutposition der ersten realen Fahrspurrandlinie und einer der Absolutposition der ersten realen Fahrspurrandlinie gegenüberliegenden Absolutposition der zweiten realen Fahrspurrandlinie; und Bestimmen einer Fahrspurmittellinie durch Verbinden oder Interpolieren der zeitlich aufeinander folgenden Mittelpositionen. Die Fahrspurmittellinie ist ein weiterer Aspekt, der bei der dreidimensionalen Straßenkarte berechnet werden kann, um deren Verwendung für autonomes Fahren zu verbessern. Eine Abweichung von einer idealen Fahrlinie oder ein Einleiten eines Überholmanövers kann bei Vorhandensein einer Fahrspurmittellinie von autonomen Fahrzeugen leichter erkannt werden. Aus den beiden Fahrspurrändern links und rechts wird die Mittellinie berechnet. Die Mittellinie jeder Fahrspur dient als Referenz und wird vorzugsweise im konstanten Abstandsmaß interpoliert. Die Auflösung der Mittellinie kann beliebig variiert werden. Dies ist häufig auch abhängig von der Fahrspurcharakteristik.

Weitere Vorteile können erzielt werden, wenn das zuletzt beschriebene Verfahren, ferner den Schritt umfasst: Berechnen von Fahrspursegmenten als Polygon aus je zwei aufeinander folgenden Mittelpositionen und denjenigen je zwei Absolutpositionen der ersten Fahrspurrandlinie und der zweiten Fahrspurrandlinie mit denen die zwei Mittelpositionen berechnet wurden, wobei eine Fahrspur als Summe der Fahrspursegmente definiert ist.

Ein Fahrspursegment besteht somit aus insgesamt sechs Stützpunkten. Diese Stützpunkte beinhalten jeweils zwei aufeinanderfolgende GNSS-Punkte der linken und rechten Fahrspurrandlinie, sowie der Fahrspurmittellinie. Diese geografischen Informationen können in die dreidimensionale Straßenkarte als ein Geometriemodell eingehen. Mit diesen Informationen kann eine dreidimensionale Straßenkarte insbesondere die folgenden Elemente umfassen:
- Polygonlinie des linken Fahrspurrands
- Polygonlinie des rechten Fahrspurrands
- Polygonlinie der Fahrbahnmitte
- Fahrspurrandpunkte des linken Fahrbahnrands
- Fahrspurrandpunkte des rechten Fahrbahnrands
- Multipunkte Fahrbahnmitte
- Polygone der Fahrspursegmente
   - Polygone der Fahrspurbegrenzung (Innenkante und Außenkante)
      - Vermessung der Außenkante und somit Speicherung des Fahrspurmarkierungsobjekts
         - Attribute:
            - Breite
            - Farbe
            - Typ
            - Qualität
            - Beschaffenheit

Auch die Fahrspursegmente erlauben eine genauere Steuerung und/oder eine genauere Validierung des Fahrzeugverhaltens von autonomen Fahrzeugen. Beispielsweise können Abweichungen vom erwarteten Fahrverhalten von anderen Verkehrsteilnehmern leichter erkannt werden, wenn das eigene Fahrzeug auf eine dreidimensionale Straßenkarte zugreift, welche Polygonsegmente enthält. Insbesondere kann ungewöhnliches Bremsverhalten und ungewöhnliches Beschleunigungsverhalten einfacher und genauer detektiert werden.

Pro Fahrspur kann es durch die Vermessung der Innenkante und der Außenkante der realen Fahrspurrandlinie insgesamt drei oder fünf fünf Linienzüge geben. Je zwei Linienzüge können die Innenkante und die Außenkante der linken und der rechten Fahrspurrandlinie sowie ein Linienzug, die Fahrspurmittellinie definieren. Für jeden dieser Linienzüge können pro Segment insbesondere die nachfolgend aufgelisteten Parameter berechnet werden:
- Fahrspurlänge
- Fahrspurbreite
- Fahrspurlinientyp
- Fahrspurlinienfarbe
- Fahrspurrichtung
- Fahrspurkrümmung
- Fahrspursteigung
- Fahrspurquerneigung
- Fahrspurlinienbeschaffenheit, die insbesondere als Sichtbarkeit gemessen werden und einen Wert zwischen 0 und 1 annehmen kann
- Fahrspurlinienqualität, die insbesondere eine absolute Genauigkeit in Metern bedeuten kann

Der Fahrspurlinientyp, die Fahrspurlinienfarbe und die Fahrspurlinienqualität kann insbesondere aus den Bildern, dem Kantenerkennungsalgorithmus und/oder der künstlichen Intelligenz abgeleitet werden. Die übrigen Parameter werden wie in nachfolgender Tabelle dargestellt berechnet:

| **Parameter** | **Einheit** | **Berechnung** | **Beschreibung** |
|---|---|---|---|
| Fahrspurlänge | m | Abstand Punkt zu Punkt | Länge entlang der Fahrspur |
| Fahrspurbreite | m | Abstand Punkt zu Punkt | Breite der Fahrspur |
| Fahrspurrichtung | deg | Winkel zwischen zwei Punkten | Richtung der Fahrspur |
| Fahrspurkrümmung | 1/m | Winkeländerung zwischen drei Punkten pro 1 Meter Segment | Krümmung der Fahrspur |
| Fahrspursteigung | % | Ableitung der Höhe | Steigung der Fahrspur |
| Fahrspurquerneigung | % | Höhendifferenz wird durch Fahrspurbreite dividiert. | Querneigung der Fahrspur |

Weitere Vorteile werden erreicht, wenn das Verfahren ferner den Schritt umfasst:
Berechnen eines Fahrspurmittenbereichs als ein zwischen der ersten realen Fahrspurrandlinie und der zweiten realen Fahrspurrandlinie liegender Bereich, der jeweils um einen Abstandswert von der ersten realen Fahrspurrandlinie und der zweiten realen Fahrspurrandlinie beabstandet ist. Auch die Fahrspurmittenbereiche erlauben bei deren Einsatz in einer dreidimensionalen Straßenkarte eine genauere Steuerung von autonomen Fahrzeugen. Beispielsweise können Abweichungen vom erwarteten Fahrverhalten von anderen Verkehrsteilnehmern leichter erkannt werden, wenn das eigene Fahrzeug auf eine dreidimensionale Straßenkarte zugreift, welche Fahrspurmittenbereiche enthält. Insbesondere kann ungewöhnliches Lenkverhalten einfacher und genauer detektiert werden. Auch Spurhalteassistenten können in ungewöhnlichen Fahrsituationen hierdurch schneller und sicherer reagieren.

Weitere Vorteile werden erzielt, wenn das letztgenannte Verfahren ferner den Schritt umfasst:
Berechnen eines Fahrspurrandbereichs als Differenz zwischen der durch die erste Fahrspurrandlinie und die zweite Fahrspurrandlinie aufgespannten Fläche und des Fahrspurmittenbereichs.

Hierdurch kann eine dreidimensionale Karte einen Randbereich und einen Mittenbereich definieren und die durch den Fahrspurmittenbereich erhaltenen Vorteile weiter verbessert werden.

Gemäß einem zweiten Aspekt liefert die Erfindung eine dreidimensionale Straßenkarte, die durch ein Verfahren nach einem der Ansprüche 1 bis 11 erhalten wurde.

Gemäß einem dritten Aspekt liefert die Erfindung ein Verfahren zur Verwendung einer dreidimensionalen Straßenkarte zur Steuerung eines autonomen Fahrzeugs.

Hierzu kann die dreidimensionale Straßenkarte im Steuerungssystem des Fahrzeugs integriert sein, oder das Fahrzeug greift zur Steuerung über ein

Kommunikationsnetzwerk auf die dreidimensionale Straßenkarte zu. Die Fahrspurrandlinien und/oder die Fahrspurmittellinie und/oder die Fahrspursegmente und/oder der Fahrspurmittenbereich und/oder der Fahrspurrandbereich können dabei genutzt werden, um Fahrmanöver auszuführen und, um das Fahrverhalten anderer Verkehrsteilnehmer einzuschätzen und die Steuerung des eigenen Fahrzeugs entsprechend anzupassen. Gemäß dem dritten Aspekt der Erfindung kann ein autonomes Fahrzeug neben dem Zugriff auf Sensordaten, die die aktuelle Fahrsituation betreffen, auch die in der dreidimensionalen Straßenkarte integrierten Daten nutzen, um Straßenverhältnisse und Fahrsituationen einzuschätzen und dadurch das eigene Fahrverhalten zu verbessern.

Gemäß einem vierten Aspekt liefert die Erfindung ein Verfahren zur Verwendung einer dreidimensionalen Straßenkarte gemäß Anspruch 12 zum Erkennen eines Überfahrens einer Fahrspurrandlinie, insbesondere bei einem Rennsportwettbewerb, umfassend die Schritte:
Bereitstellen einer dreidimensionalen Straßenkarte, insbesondere nach Anspruch 12;
Bewegen eines Detektionsfahrzeugs mit einer GNSS-Einrichtung auf einem Straßenbereich, der durch die dreidimensionale Straßenkarte abgedeckt ist;
Aufnehmen einer Fahrzeugposition mit der GNSS-Einrichtung;
Abgleichen der Fahrzeugposition mit Koordinaten der ersten Fahrspurrandlinie und/oder der zweiten Fahrspurrandlinie; und
Erkennen des Überfahrens einer Fahrspurrandlinie durch den Abgleich.

Das Detektionsfahrzeug weist hierzu vorzugsweise ebenfalls eine GNSS-Messeinrichtung auf und es sind weiter bevorzugt dessen Dimensionen, also dessen maximale Ausdehnung von der GNSS-Messeinrichtung bekannt. Durch Aufnehmen der Fahrzeugposition über eine Zeitspanne wird eine Fahrzeugtrajektorie gebildet. Die maximalen Fahrzeugdimensionen können durch Offsets hinzugefügt werden. Auf diese Weise kann auch detektiert werden, wenn das Detektionsfahrzeug, welches beispielsweise gerade an einem Rennsportwettbewerb teilnimmt, mit nur einem Reifen oder eines Teils eines Reifens über eine Fahrspurrandlinie fährt.

Schließlich liefert die Erfindung gemäß einem vierten Aspekt eine Sensoreinrichtung zum Vermessen einer realen Fahrspurrandlinie, umfassend ein Fahrzeugs, welches eine Messeinrichtung umfassend ein Inertialmesssystem, eine GNSS-Antenne und eine mit dem Inertialmesssystem und der GNSS-Antenne zeitsynchrone Kameraeinrichtung umfasst, wobei die Messeinrichtung dazu eingerichtet ist, die Schritte b) bis f) nach einem Verfahren der Ansprüche 1 bis 11 durchzuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: ein Fahrzeug mit einer Messeinrichtung zur Durchführung eines erfindungsgemäßen Verfahrens,
- Fig. 2: eine Kalibriereinrichtung mit aufgenommenen Messwerten zum Kalibrieren der Messeinrichtung,
- Fig. 3: ein Bild aus einer Straßenmessung mit einer Vermessungslinie, die den äußeren Auflagepunkt des Reifens und einen Fahrspurrandpunkt des Fahrspurrands verbindet,
- Fig. 4: ein Analysebild, welches aus einer Vermessungsfahrt erzeugt worden ist,
- Fig. 5: eine dreidimensionale Straßenkarte mit zwei Fahrspurrandlinien, einer Fahrspurmittellinie und Fahrspursegmenten,
- Fig. 6: eine dreidimensionale Straßenkarte mit zwei Fahrspurrandlinien, einem Fahrspurmittenbereich und einem Fahrspurrandbereich,

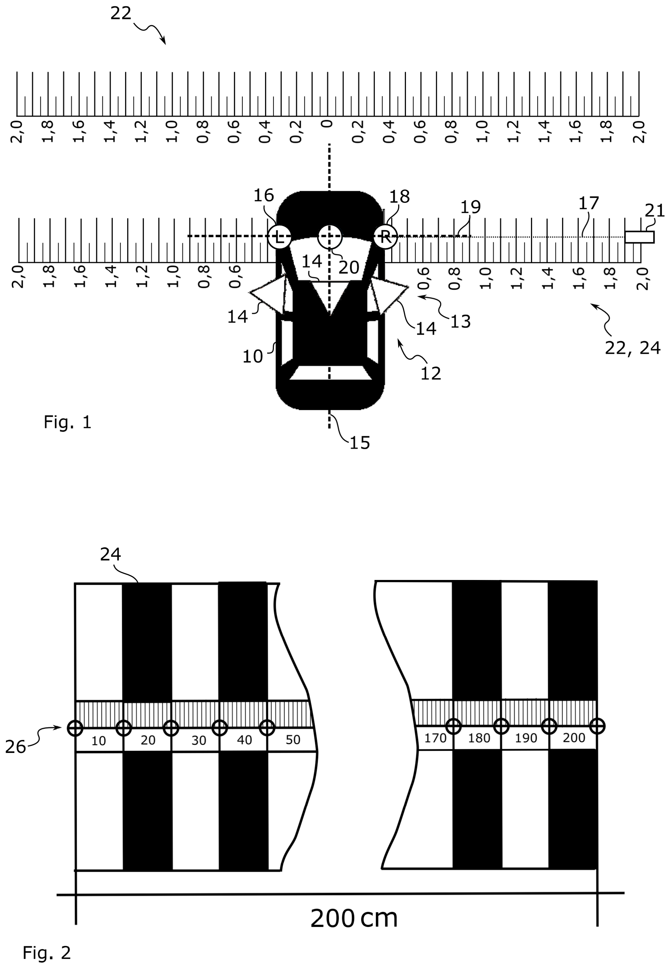

Figur 1 zeigt schematisch ein Fahrzeug 10 mit einer Messeinrichtung 12, welches zur Durchführung eines erfindungsgemäßen Verfahrens zum Vermessen einer realen Fahrspurrandlinie geeignet ist. Die Messeinrichtung 12 umfasst eine Kameraeinrichtung 13 mit drei zeitsynchronen Kameras 14. Eine erste Kamera 14 ist an der linken Seite des Fahrzeugs 10 und eine zweite Kamera 14 an der rechten Seite des Fahrzeugs 10 angeordnet. Die erste und zweite Kamera 14 können insbesondere in einem Bereich zwischen der B-Säule des Fahrzeugs 10 und einer vorderen Radebene 19 angeordnet sein. Die vordere Radebene 19 verläuft senkrecht zur Fahrzeugmittelebene 15 und parallel zur Radachse. Besonders bevorzugt können die Kameras 14 senkrecht über den Reifen 16, 18 am Fahrzeug 10 angeordnet sein. In einer solchen Anordnung können die Sichtfelder der Kameras 14 parallel zur Achsrichtung verlaufen, wodurch eine perspektivische Verzerrung der Aufnahmen nur in eine Richtung verläuft und dadurch minimiert ist und in Konsequenz die Genauigkeit des Verfahrens erhöht wird.

Die erste Kamera 14 ist derart ausgerichtet, dass ihr Sichtfeld einen äußeren Auflagepunkt eines linken Reifens 16 umfasst und die zweite Kamera derart ausgerichtet ist, dass ihr Sichtfeld einen äußeren Auflagepunkt eines rechten Reifens 18 umfasst. Die Kameras 14 sind als Videokameras ausgestaltet, um eine ausreichend hohe Bildaufnahmerate zu ermöglichen.

Die Messeinrichtung 12 umfasst ferner eine GNSS-Antenne 20, die mit der Kameraeinrichtung 13 zeitsynchron arbeitet. Die GNSS-Antenne umfasst eine Sende- und Empfangseinrichtung sowie eine Auswerteeinrichtung (jeweils nicht explizit dargestellt) zur Auswertung der Positionsdaten. Der zeitsynchrone Betrieb bedeutet, dass die von der GNSS-Antenne 20 aufgenommenen Positionsdaten einen Zeitstempel aufweisen und die von der Kameraeinrichtung 13 aufgenommenen Bilder ebenfalls einen Zeitstempel aufweisen und dass die Zeitstempel bei gleichen Aufnahmezeiten miteinander übereinstimmen. Hierdurch kann eine Zuordnung zwischen den Positionsdaten und den Bildern durchgeführt werden und eine Synchronisation zwischen den Bildern und den Daten vorgenommen werden. Ein ebenfalls zeitsynchrones Inertialmesssystem ist nicht explizit dargestellt. Eine dritte Kamera 14 ist zentral am Fahrzeug angeordnet, wobei das Sichtfeld der dritten Kamera 14 nach vorne ausgerichtet ist, so dass deren Sichtfeld im Betrieb die Fahrzeugfront und die Fahrspur zeigt. Die dritte Kamera kann dadurch die Auswertung vereinfachen.

Die Position der GNSS-Antenne zu den äußeren Auflagepunkten der Reifen ist bekannt.

Das Fahrzeug ist auf einer Kalibriereinrichtung 22 angeordnet. Die Kalibriereinrichtung 22 ist als Kalibrierband 24 ausgestaltet und weist einen Maßstab auf, der quer zur Fahrtrichtung, in Achsrichtung unterhalb der Vorderreifen angeordnet ist. In dieser Position kann eine Kalibrierung der Kameraeinrichtung 13 durchgeführt werden. Zur besonders genauen senkrechten Anordnung des Kalibrierbands 24 wird eine Lasermesseinrichtung 21 genutzt, Mit der an einem Ende des Kalibrierbands 24 angeordneten Lasermesseinrichtung 21 kann der von ihr ausgehende Laserstrahl 17 und mit dieser das Kalibrierband 24 besonders genau parallel zur vorderen Radebene 19 und senkrecht zur Fahrzeugmittelebene 15 angeordnet werden. Da die genaue Anordnung des Kalibrierbands 24 Auswirkungen auf die Kalibrierung der Messeinrichtung 12 hat, wird durch die Lasermesseinrichtung 21 die Genauigkeit des Verfahrens erhöht.

Figur 2 zeigt schematisch ein Kalibrierband 24. Das Kalibrierband 24 weist durch Kreise markierte Kalibrierpunkte 26 auf einer Linie auf. Auf die Aufnahme einer Kamera 14 werden zur Kalibrierung der Kamera 14 die Kalibrierpunkte mit den Pixeln des Kamerabildes verknüpft. Dies kann durch eine manuelle oder automatische Zuordnung erfolgen. Hierzu ist das Kalibrierband 24 vorzugsweise so angeordnet, dass dessen Abstandsmaß entlang einer Pixellinie der Kamera 14 verläuft. Die Kalibrierung kann im Verfahren durch eine Software, die Mausklicks als Setzen eines Kalibrierpunkts interpretiert, durchgeführt werden. Mit den Kalibrierpunkten kann dann das Verhältnis von Pixel-Abständen zu dem realem Abstandsmaß bestimmt werden.

In einer Beispielmessung befinden sich Im äußeren Randbereich des Bildes in einem Abstandssegment von 1 cm insgesamt 69 Pixel. In diesem Beispiel kann somit auf 0,015 cm genau gemessen werden.

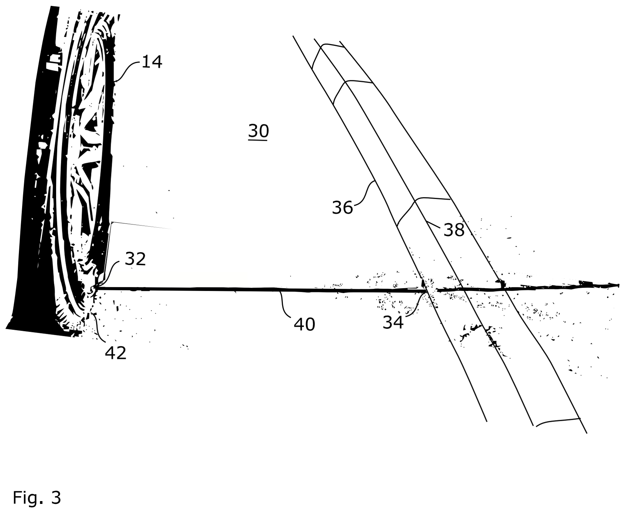

In Figur 3 ist ein Bild einer Straßenmessung zum Vermessen einer realen Fahrspurrandlinie 36 gezeigt, welches während des Abfahrens einer Fahrspur aufgenommen worden ist. Das Bild zeigt einen äußeren Auflagepunkt 32 des rechten vorderen Reifens 14 und dient zur Aufnahme der Vermessungslinie 40, die zumindest den äußeren Auflagepunkt 32 des Reifens 14 und einen Fahrspurrandpunkt 34 der realen Fahrspurrandlinie 36 verbindet. In diesem Beispiel ist die reale Fahrspurrandlinie 36 durch die der Fahrspur 30 zugewandte, untere Kante eines Bordsteins 38 definiert. In anderen Fällen kann die reale Fahrspurrandlinie 36 durch eine Fahrbahnmarkierung, eine Fahrbahnmarkierungslinie oder auf andere Weise definiert sein. Die reale Fahrspurrandlinie 36 kann mit einem Kantenerkennungsalgorithmus bestimmt und/oder definiert werden. Die Fehler aus einer maschinellen Kantendetektion können optional, um eine höhere Genauigkeit zu erreichen, ausgeglichen werden und insbesondere mit menschlicher Logik eliminiert werden. Hierdurch können beispielsweise Effekte ausgeglichen werden, die dadurch entstehen, dass Sonnenlicht eine Erkennung erschwert, Schatten, Laub, Sand, oder andere Objekte die Fahrbahnmarkierungen versperren oder dadurch, dass keine Fahrbahnmarkierungen vorhanden sind.

Das Bild zeigt die Vermessungslinie 40 zwischen dem äußeren Auflagepunkt 32 des Reifens 14 und einem Fahrspurrandpunkt 34, die horizontal entlang einer Pixellinie der Kamera verläuft, die zur Aufnahme des Bildes verwendet wurde. Die Vermessungslinie 40 wird aus dem Bild extrahiert. Dies kann durch zuschneiden des Bildes auf die Vermessungslinie 40 oder durch transformieren der Vermessungslinie 40 auf eine horizontale Vermessungslinie erfolgen. Eine solche Transformation kann durch Faltung und/oder Rotation der Bilddaten durchgeführt werden, wobei die Abstände zur Berechnung der Absolutpositionen der realen Fahrspurlinie entsprechend der Kalibrierung in Schritt b) transformiert werden. In diesem Beispiel hat die Vermessungslinie 40 eine Länge in x-Richtung von 1028 Pixeln und eine Höhe von 1 Pixel. Grundsätzlich sind die Vermessungslinien 40 somit farbige Bilder, vorzugsweise mit einer Pixelhohe von 1 und in diesem Fall einer Pixelbreite von 1024. Die im Verfahren üblicherweise vorhandenen Farbinformationen sind In den Figuren der Patentanmeldung nicht mit dargestellt.

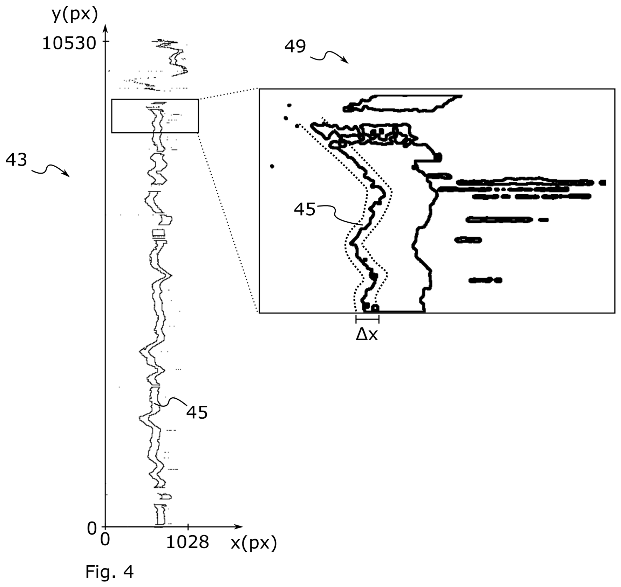

Die Vermessungslinien 40 der übrigen Bilder der Messfahrt werden in gleicher Weise extrahiert. Die Extraktion kann automatisiert erfolgen. Aus den Vermessungslinien 40 der Bilder werden anschließend zeitlich geordnet zu einem Analysebild 43, wie es in Figur 4 dargestellt ist, zusammengefügt. Hierzu werden die Vermessungslinien 40 zeitlich geordnet zusammengefügt. Jede horizontale Linie im Analysebild 43 entspricht einer Vermessungslinie 40, die aus einem Bild des Videos extrahiert wurde, das während der Vermessungsfahrt aufgenommen wurde. Entsprechend kann zu jedem Pixel des Analysebilds aus dessen y-Koordinate ein Aufnahmezeitpunkt und/oder eine GNSS-Aufnahmekoordinate bestimmt werden.

Das Fahrzeug 10 hat während der Aufnahme mit der kalibrierten Kameraeinrichtung 13 kontinuierlich die reale Fahrspurrandlinie 36 aufgenommen. Die rekonstruierte Fahrspurrandlinie 45 ist durch einen Kontrast im Analysebild 43 erkennbar, zumindest in solchen Bereichen, in denen sie auch real vorhanden oder detektierbar ist. Das Analysebild 43 zeigt hierdurch die Fahrspurrandlinie 45 über die gesamte Fahrstrecke der Messfahrt. Die Fahrstrecke beträgt in dem dargestellten Beispiel 10km, welches 10530 Pixel entspricht. Aus Gründen der Übersichtlichkeit ist die Skalierung in Figur 4 in x-Richtung nicht identisch zur Skalierung y-Richtung gewählt worden. In Abhängigkeit des Abstands des Fahrzeugs 10 von der realen Fahrspurrandlinie 36 schwankt die x-Position der rekonstruierten Fahrspurrandlinie 45, weswegen die rekonstruierte Fahrspurrandlinie 45 im Analysebild 43 kurvig erscheint. Die rekonstruierte Fahrspurrandlinie 45 weist im Analysebild 43 einen Kontrast zur Fahrspur auf. Aufgrund des Kontrasts kann die Position der rekonstruierten Fahrspurrandlinie 45 im Analysebild 43 mit einem Kantendetektionsalgorithmus ermittelt und erzeugt werden. Hierbei wird die fahrzeugnahe Kante der realen Fahrspurrandlinie 36 als rekonstruierte Fahrspurrandlinie 45 bezeichnet. In einem vergrößerten Ausschnitt 49 des Analysebilds 43 ist eine Detailansicht der Fahrzeugrandlinie 45 dargestellt. In dieser ist mit unterbrochenen Linien der Fehler des Kantendetektionsalgorithmus Δx dargestellt, der aus der Detektionsgenauigkeit folgt. Die Detektionsgenauigkeit beträgt im in Figur 4 dargestellten Beispiel 5 Pixel, was 7 mm Detektionsgenauigkeit der realen Fahrspurrandlinie 36 entspricht. Der Gesamtfehler des Verfahrens zum Vermessen einer realen Fahrspurrandlinie setzt sich aus den Einzelfehlern der Messung zusammen. Werden die Einzelfehler reduziert, wird auch der Gesamtfehler reduziert.

Um die reale Fahrspurrandlinie 36 zu vermessen, also um Absolutpositionen der realen Fahrspurrandlinie zu berechnen, werden jeweils zum gleichen Zeitpunkt aufgenommene Werte der Fahrzeugausrichtung, der Fahrzeugposition herangezogen. Aus diesen Werten und den diesem Zeitpunkt entsprechenden Werten der rekonstruierten Fahrspurrandlinie 45 im Analysebild 43 folgt die Absolutposition der realen Fahrspurrandlinie 36 als doppelter Offset, der den konstanten Wert zwischen GNSS-Antenne 20 und äußerem Auflagepunkt 32 des Reifens 14 umfasst und den variablen Messwert zwischen äußerem Auflagepunkt 32 des Reifens 14 und der rekonstruierten Fahrspurrandlinie 45 im Analysebild 43 umfasst. Aus einer Vermessungslinie 40, die zwischen dem äußeren Auflagepunkt 32 des Reifens 14 und einem Fahrspurrandpunkt 34 verläuft, und die entsprechend einer Pixellinie eines Detektors der Kamera verläuft, die während der Kalibration verwendet wurde, wird der Abstand 42 bestimmt. Eine Absolutposition in GNSS-Koordinaten des Fahrspurrandpunkts wird anschließend aus der Fahrzeugposition und dem Abstand 42 für den Zeitpunkt berechnet.

Diese Schritte werden für beide realen Fahrspurrandlinien 36 der Fahrspur 30 wiederholt. Hierzu kann das Fahrzeug 10 mit nur einer Kamera 14 ausgestattet sein, die beispielsweise ausschließlich den rechten Reifen 14 aufnimmt. In diesem Fall kann die Fahrspur 30 zweimal in jeweils unterschiedlicher Richtung befahren werden, um Absolutpositionen beider realer Fahrpurrandlinien 36 zu vermessen.

Weist die Kameraeinrichtung 13 dagegen zwei auf unterschiedlichen Seiten des Fahrzeugs 10 angeordnete Kameras 14 auf, kann es ausreichend sein, dass die Fahrspur 30 nur einmal befahren wird und die Bilder der beiden realen Fahrspurrandlinien 36 gleichzeitig aufgenommen werden können. In diesem Fall wird das Verfahren für jede Fahrspur separat durchgeführt.

Durch Verbinden oder Interpolieren von einer Mehrzahl von zeitlich aufeinander folgenden Absolutpositionen der ersten und zweiten rekonstruierten Fahrspurrandlinien 45 separat, werden rekonstruierte Fahrspurrandlinien 45 des ersten und zweiten Fahrspurrands erzeugt.

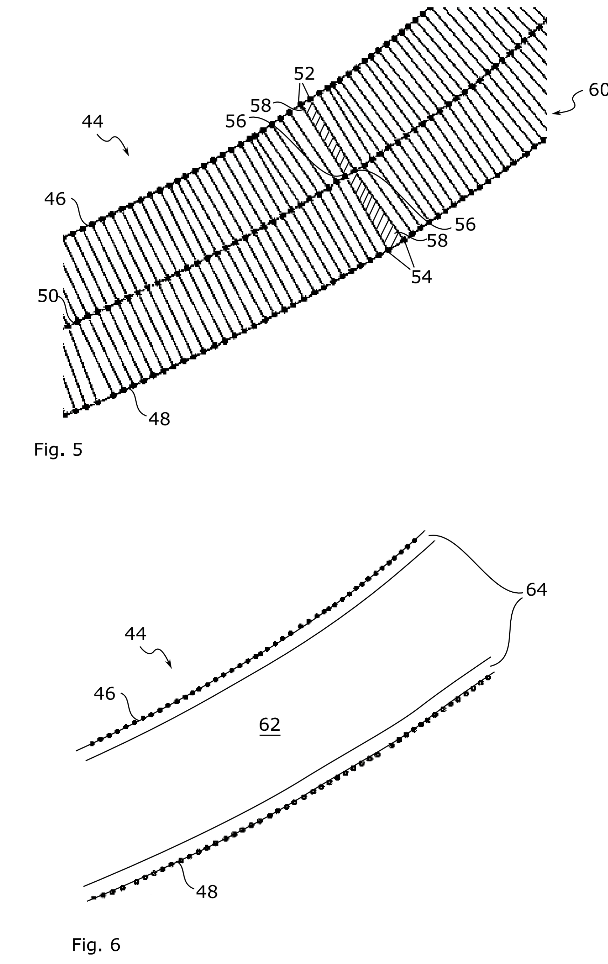

In Figur 5 ist eine dreidimensionale Straßenkarte 44 gemäß dem zweiten Aspekt der Erfindung dargestellt, welche eine erste Fahrspurrandlinie 46, eine zweite Fahrspurrandlinie 48 und eine Fahrspurmittellinie 50 umfasst. Die erste und zweite Fahrspurrandlinie 46, 48 entsprechen ihren Werten nach den Werten der Absolutpositionen von realen Fahrspurrandlinien 36, die durch ein Verfahren gemäß dem ersten Aspekt der Erfindung bestimmt wurden und sind durch Interpolieren von jeweiligen Absolutpositionen 52, 54 bestimmt worden und bilden diese daher im dreidimensionalen GNSS-Koordinatensystem nach.

Aus den beiden Fahrspurrandlinien 46, 48 und/oder deren Absolutpositionen 52, 54 wird die Fahrspurmittellinie 50 berechnet. Die Fahrspurmittellinie 50 dient als Referenz und wird im konstanten Abstandsmaß interpoliert. Die Auflösung der Fahrspurmittellinie 50 kann im Prinzip beliebig variiert werden, insbesondere in Abhängigkeit der Fahrspurcharakteristik. Im gezeigten Beispiel kann die Fahrspurmittellinie 50 dadurch bestimmt werden, dass zunächst eine Mittelposition 56 als geographischen Mittelpunkt von einer Absolutposition 52 der ersten Fahrspurrandlinie 44 und einer der Absolutposition 52 des ersten Fahrspurrands gegenüberliegenden Absolutposition 54 der zweiten Fahrspurrandlinie 48 berechnet wird. Anschließend kann die Fahrspurmittellinie 50 durch Verbinden oder Interpolieren der zeitlich aufeinander folgenden Mittelpositionen 56 bestimmt werden. Die dreidimensionale Straßenkarte 44 weist Fahrspursegmente 58 auf. Fahrspursegmente 58 werden als Polygon aus je zwei aufeinander folgenden Mittelpositionen 56 und denjenigen je zwei Absolutpositionen 52 der ersten Fahrspurrandlinie 46 und der zweiten Fahrspurrandlinie 48 mit denen die zwei Mittelpositionen 56 berechnet wurden, bestimmt. Eine Fahrspur 60 ist als Summe der Fahrspursegmente 58 definiert. Die Summe der Fahrspursegmente 58 bilden somit eine Fläche im dreidimensionalen Raum. Diese Fläche und damit die Fahrspur 60 kann mittels einer dreidimensionale Interpolation zwischen den Fahrspursegmenten 58 und/oder den Absolutpositionen 52, 54 und Mittelpositionen 56 weiter geglättet werden. Ein Fahrspursegment 58 besteht somit aus insgesamt sechs Stützpunkten. Diese Stützpunkte beinhalten jeweils zwei aufeinanderfolgende GNSS-Punkte der linken und der rechten Fahrspurrandlinie 46, 48, sowie der Mitte der Fahrspur 60.

Figur 6 zeigt eine dreidimensionale Straßenkarte 44 mit zwei Fahrspurrandlinien 46, 48 einem Fahrspurmittenbereich 62 und einem Fahrspurrandbereich 64, wobei der Fahrspurrandbereich 64 aus zwei örtlich voneinander getrennten Bereichen besteht.

Der Fahrspurmittenbereichs 62 ist ein zwischen der ersten Fahrspurrandlinie 46 und der zweiten Fahrspurrandlinie 48 liegender Bereich, der jeweils um einen Abstandswert von der ersten Fahrspurrandlinie 46 und der zweiten Fahrspurrandlinie 48 beabstandet ist. Er kann durch einfache geometrische Überlegungen berechnet werden. Der Fahrspurrandbereich 64 kann berechnet werden als Differenz, zwischen der durch die erste Fahrspurrandlinie 46 und die zweite Fahrspurrandlinie 48 aufgespannten Fläche und den Fahrspurmittenbereich 62 berechnet werden.

Die voranstehenden Erläuterungen zu den Ausführungsformen beschreiben die vorliegende Erfindung ausschließlich im Rahmen von Beispielen.

### Bezugszeichenliste

- 10: Fahrzeug
- 12: Messeinrichtung
- 13: Kameraeinrichtung
- 14: Kamera
- 15: Fahrzeugmittelebene
- 16: linker Reifen
- 17: Laserstrahl
- 18: rechter Reifen
- 19: vordere Radebene
- 20: GNSS-Antenne
- 21: Lasermesseinrichtung
- 22: Kalibriereinrichtung
- 24: Kalibrierband
- 26: Kalibrierpunkt
- 30: Fahrspur
- 32: äußerer Auflagepunkt
- 34: Fahrspurrandpunkt
- 36: reale Fahrspurrandlinie
- 38: Bordstein
- 40: Vermessungslinie
- 42: Abstand
- 43: Analysebild
- 44: dreidimensionale Straßenkarte
- 45: rekonstruierte Fahrspurrandlinie
- 46: erste Fahrspurrandlinie
- 48: zweite Fahrspurrandlinie
- 49: vergrößerter Ausschnitt
- 50: Fahrspurmittellinie
- 52: Absolutposition der ersten Fahrspurrandlinie
- 54: Absolutposition der zweiten Fahrspurrandlinie
- 56: Mittelposition
- 58: Fahrspursegment
- 60: Fahrspur
- 62: Fahrspurmittenbereich
- 64: Fahrspurrandbereich

- Δx: Fehler des Kantendetektionsalgorithmus

## Patentansprüche

1. Verfahren zum Vermessen einer realen Fahrspurrandlinie, umfassend die Schritte:
a) Bereitstellen eines Fahrzeugs (10), welches eine Messeinrichtung (12) umfassend ein Inertialmesssystem, eine GNSS-Antenne (20) und eine mit dem Inertialmesssystem und der GNSS-Antenne (20) zeitsynchrone Kameraeinrichtung (13) umfasst;
b) Kalibrieren der Kameraeinrichtung (13) mit einer am Boden angeordneten Kalibriereinrichtung (22);
c) Aufnehmen der Fahrzeugausrichtung mit dem Inertialmesssystem, der Fahrzeugposition mit der GNSS-Antenne (20) und Bildern mit der kalibrierten Kameraeinrichtung (13), während eines Abfahrens einer Fahrspur (60), sodass wenigstens einige der Bilder eine Vermessungslinie (40) zwischen einem äußeren Auflagepunkt (32) eines Reifens (16, 18) und einer realen Fahrspurrandlinie (36) aufweisen;
d) Erzeugen eines Analysebilds (43) als zeitlich geordnete Anordnung der Vermessungslinien (40);
e) Erzeugen einer rekonstruierten Fahrspurrandlinie (45) im Analysebild (43) mit einem Kantendetektionsalgorithmus, und
f) Berechnen von Absolutpositionen der realen Fahrspurrandlinie (36) aus jeweils zum gleichen Zeitpunkt aufgenommenen Werten der Fahrzeugausrichtung, der Fahrzeugposition und einem Abstand (42) zwischen dem äußeren Auflagepunkt (32) des Reifens (16, 18) und dem jeweiligen Zeitpunkt entsprechenden Werten der rekonstruierten Fahrspurrandlinie (45) im Analysebild (43).

2. Verfahren nach Anspruch 1, wobei die Vermessungslinien (40) eine Höhe von 1 Pixel aufweisen.

3. Verfahren nach Anspruch 1, wobei das Aufnehmen von Bildern in Schritt b) in zeitsynchronen Abständen erfolgt, wobei die Kameraeinrichtung (13) vorzugsweise eine Videokamera aufweist.

4. Verfahren nach einem der vorhergehenden Ansprüche, wobei die Vermessungslinie (40) eine horizontale Linie ist oder zu einer horizontalen Linie transformiert ist.

5. Verfahren nach einem der vorhergehenden Ansprüche, wobei der Kantendetektionsalgorithmus eine Analyse mittel künstlicher Intelligenz umfasst.

6. Verfahren nach einem der vorhergehenden Ansprüche, wobei die Kalibriereinrichtung (22) eine Maßeinrichtung mit auf der Maßeinrichtung angeordneten Kalibriermarkierungen umfasst.

7. Verfahren nach einem der vorhergehenden Ansprüche, wobei das Verfahren zum Vermessen der realen Fahrspurrandlinie (36), die als erste reale Fahrspurrandlinie bezeichnet wird, zusätzlich dazu verwendet wird, eine zweite reale Fahrspurrandlinie zu vermessen, wobei die erste reale Fahrspurrandlinie und die zweite reale Fahrspurrandlinie einander gegenüberliegend sind und eine Fahrspur (30) definieren.

8. Verfahren nach einem der vorhergehenden Ansprüche, ferner umfassend den Schritt: Ausgeben einer Karte mit den Absolutpositionen der realen Fahrspurrandlinie.

9. Verfahren nach einem der vorhergehenden Ansprüche, wobei jeder Koordinate im Analysebild ein Aufnahmezeitpunkt und/oder eine Fahrzeugposition und/oder eine Fahrzeugausrichtung zugeordnet ist.

10. Verfahren nach einem der Ansprüche 7 bis 9, ferner umfassend die Schritte:
Berechnen einer Mittelposition (56) als geographischen Mittelpunkt von einer Absolutposition (52) der ersten realen Fahrspurrandlinie (46) und einer der Absolutposition (52) der ersten realen Fahrspurrandlinie (36) gegenüberliegenden Absolutposition (54) der zweiten realen Fahrspurrandlinie (48); und
Bestimmen einer Fahrspurmittellinie (50) durch Verbinden oder Interpolieren der zeitlich aufeinander folgenden Mittelpositionen (56).

11. Verfahren nach Anspruch 10, ferner umfassend den Schritt:
Berechnen von Fahrspursegmenten (58) als Polygon aus je zwei aufeinander folgenden Mittelpositionen (56) und denjenigen je zwei Absolutpositionen (52, 54) der ersten Fahrspurrandlinie (46) und der zweiten Fahrspurrandlinie (48) mit denen die zwei Mittelpositionen (56) berechnet wurden, wobei die Fahrspur (60) als Summe der Fahrspursegmente (58) definiert ist.

12. Dreidimensionale Straßenkarte (44), erhalten durch ein Verfahren nach einem der vorhergehenden Ansprüche.

13. Verwendung einer dreidimensionalen Straßenkarte (44) gemäß Anspruch 12 zur Steuerung eines autonomen Fahrzeugs.

14. Verwendung einer dreidimensionalen Straßenkarte (44) gemäß Anspruch 12 zum Erkennen eines Überfahrens einer Fahrspurrandlinie (46, 48), insbesondere bei einem Rennsportwettbewerb, umfassend die Schritte:
Bereitstellen einer dreidimensionalen Straßenkarte (44) nach Anspruch 12;
Bewegen eines Detektionsfahrzeug mit einer GNSS-Einrichtung auf einem Straßenbereich, der durch die dreidimensionale Straßenkarte (44) abgedeckt ist;
Aufnehmen einer Fahrzeugposition mit der GNSS-Einrichtung;
Abgleichen der Fahrzeugposition mit Koordinaten der realen Fahrspurrandlinie (46); und
Erkennen des Überfahrens der realen Fahrspurrandlinie (46) durch den Abgleich.

15. Sensoreinrichtung zum Vermessen einer realen Fahrspurrandlinie, umfassend ein Fahrzeugs (10), welches eine Messeinrichtung (12) umfassend ein Inertialmesssystem, eine GNSS-Antenne (20) und eine mit dem Inertialmesssystem und der GNSS-Antenne (20) zeitsynchrone Kameraeinrichtung (13) umfasst, wobei die Messeinrichtung dazu eingerichtet ist, die Schritte b) bis f) nach einem Verfahren der Ansprüche 1 bis 11 durchzuführen.
